# EUROPÄISCHE PATENTSCHRIFT

(11) **EP 1 794 045 B1**
(45) Veröffentlichungstag und Bekanntmachung des Hinweises auf die Patenterteilung: **24.12.2008**
(21) Anmeldenummer: 05787277.2
(22) Anmeldetag: 20.09.2005
(51) Int. Cl.: B60T 17/08, F16D 65/32

(54) **BREMSZYLINDER FÜR FAHRZEUGBREMSEN**
BRAKE CYLINDER FOR MOTOR VEHICLE BRAKES
CYLINDRE DE FREIN POUR FREINS DE VEHICULES

(30) Priorität: 21.09.2004 DE 102004046028
(43) Veröffentlichungstag der Anmeldung: 13.06.2007
(73) Patentinhaber: KNORR-BREMSE SYSTEME FÜR NUTZFAHRZEUGE GMBH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2005/010114
(87) Internationale Veröffentlichungsnummer: WO 2006/032446

(56) Entgegenhaltungen:
- EP-A- 0 452 621
- DE-A1- 19 933 165
- FR-A- 2 203 731
- GB-A- 1 382 507
- US-A- 3 188 922
- US-A- 3 717 072

## Beschreibung

Die Erfindung betrifft einen Bremszylinder für Fahrzeugbremsen, insbesondere für Bremsen von Nutzfahrzeugen nach dem Oberbegriff des Anspruches 1.

Zur Erzeugung der notwendigen großen Bremskräfte sind Nutzfahrzeuge mit druckluftbetätigten Bremsen ausgerüstet. Die sogenannte Betriebsbremse wird dabei mit Druckluftzylindern, vorzugsweise in Form von Membranzylindern betätigt. Die Feststellbremse hingegen kann nicht mit einem Druckluftzylinder betätigt werden, da es eine gesetzliche Forderung gibt, die besagt, dass Feststellbremsen nur mechanisch wirken dürfen, denn nur so ist eine konstante Bremskraft über einen praktisch unbegrenzten Zeitraum gewährleistet. Beim mit Druckluft beaufschlagten Bremsen kann es nämlich durch Leckagen zu einem Abfall der Bremskraft kommen.

Aus diesem Grunde sind die Bremsen von Nutzfahrzeugen mit sogenannten Federspeicherzylindern ausgerüstet. Die Bremsbetätigungskraft wird hierbei über eine gespannte Feder erzeugt. Damit ist der Anforderung einer mechanisch wirkenden Feststellbremse genüge getan. Da diese Federspeicherzylinder in der Regel über sehr hohe Kräfte verfügen, ist ein manuelles Lösen im Betriebsfall nicht mehr sinnvoll. Das Lösen der Feststellbremse geschieht daher mittels Druckluft. Um dies zu ermöglichen sind Federspeicherzylinder mit einem Lösekolben ausgerüstet. Mit diesem Kolben ist es möglich, bei Einleitung von Druckluft die Feder so weit zusammen zu drücken bis die Bremse gelöst ist. Damit die Feststellbremse während der Fahrt nicht eingelegt ist, wird der Kolben ständig mit Druckluft beaufschlagt, so dass sich die Feder nicht entspannen kann und somit die Feststellbremse nicht zur Wirkung kommt.

Eine Feststellbremse wird meist nur an einer Achse benötigt, im Regelfall ist dies die Hinterachse. Daher sind die Bremsen an der Hinterachse mit sogenannten Kombizylinder ausgerüstet. Ein Kombizylinder besteht praktisch aus zwei verschiedenen Zylinderarten, nämlich einem Federspeicherzylinder für die Feststellbremsen und einem Druckluftzylinder für die Betriebsbremse. Dies ist üblicherweise ein Membranzylinder.

Üblicherweise sind die beiden Zylinder in axialer Richtung hintereinander angeordnet. Hinter dem Membranteil des Kombizylinders ist der Federspeicherzylinder angeordnet, welcher mit seiner Kolbenstange auf den Kolbenteller des Membranzylinders und von diesem auf den Bremshebel wirkt.

Nachteilig ist bei dieser Bauform, dass relativ viel Bauraum benötigt wird. Daher ist es an Vorderachsen aufgrund der Lenkkinematik häufig sehr schwierig, diese Kombizylinder einzubauen. Durch die Einführung aufwendigerer Fahrwerksysteme, wie z. B. Einzelradaufhängungen werden die Schwierigkeiten noch zusätzlich erhöht. Wegen der steigenden Anforderungen an die Leistung der Feststellbremsanlage gibt es aber zunehmend den Wunsch auch an der Vorderachse Feststellbremsen zu installieren. Mit den üblichen, vorstehend geschilderten Kombizylindern lässt sich dies jedoch häufig nicht realisieren.

Das Dokument EP 0452621 offenbart eine Bremszylinder gemäß dem Oberbegriff des Anspruchs 1.

Der vorliegenden Erfindung liegt die Aufgabe zugrunde, Bauformen für Kombizylinder zu finden, die deutlich weniger Bauraum benötigen.

Die gestellte Aufgabe wird durch den Gegenstand des Anspruches 1 gelöst.

Im Gegensatz zu den bisher bekannten Ausführungen ist es nunmehr möglich, dass ein konstruktiver Aufbau des Bremszylinders erreicht wird, der es ermöglicht, durch Betätigung des Zylinders für die Betriebsbremse den Federspeicherzylinder zu lösen. Der erfindungsgemäße Bremszylinder könnte auch als Kurzbaukombizylinder bezeichnet werden.

Dabei ist vorgesehen, dass bei der Feststellbremsung der von der Federspeicherfeder belastete Kolben relativ zum Kolben für die Betriebsbremsung verschiebbar ist. Wie bereits erwähnt, ist besonders vorteilhaft, dass zum Lösen des von der Federspeicherfeder belasteten Kolbens zunächst der Kolben für die Betriebsbremsung in Richtung zum Kolben für die Feststellbremse verfahrbar ist, dass der Sperrmechanismus danach schließbar ist, und dass anschließend beide Kolben durch Druckentlastung des Kolbens für die Betriebsbremsung in die Lösestellung mittels der Rückstellfeder verfahrbar sind. Der Kolben für die Betriebsbremsung hat demzufolge eine Doppelfunktion nämlich einmal die Betätigung der Bremse während der Fahrt und das Rückstellen des federbelasteten Kolbens in die Lösestellung. Spätestens nach Erreichen der Lösestellung wird durch Druckbeaufschlagung des von der Federspeicherfeder belasteten Kolbens der Sperrmechanismus geschlossen. Dies erfolgt zweckmäßigerweise wenn der Kolben für die Betriebsbremsung in die zur Mitnahme des Kolbens für die Feststellbremsung verfahren ist.

Wenn jedoch ausschließlich der Kolben für die Feststellbremsung verfahren werde soll, muss zunächst der Sperrmechanismus freigeben werden. Dies erfolgt zweckmäßigerweise durch Druckentlastung des Kolbens für die Feststellbremsung.

In konstruktiv einfacher Weise besteht der Sperrmechanismus aus zwei in der Sperrstellung sich kontaktierende Konusflächen. Dabei ist eine Konusfläche dem Kolben für die Betriebsbremsung und die andere Konusfläche an einem Schaltzylinder angeordnet, der mit dem zweiten Druckraum in Wirkverbindung steht. Die Konusflächen sind so gebildet, dass sich die dem Kolben für die Betriebsbremsung zugeordnete Konusfläche in Verfahrrichtung der beiden Kolben vergrößert. Der Konuswinkel ist relativ klein, so dass sich die Konusflächen verkeilen können. Zweckmäßigerweise ist der Schaltzylinder zweiteilig ausgebildet und besteht aus einem dem Kolben für die Betriebsbremsung zugewandt liegenden Schaltring und einer dem Kolben für die Betriebsbremsung abgewandt liegenden Schalttopf, wobei der Schalttopf den zweiten Druckraum zur Betätigung des Sperrmechanismus enthält.

Zum Lösen des Sperrmechanismus ist vorgesehen, dass zwischen dem Kolben für den Feststellbremsvorgang und dem Schaltring ein Ringraum vorgesehen ist, in dem eine Druckfeder eingesetzt ist, die sich mit einem Ende an einem nach innen gerichteten Kragen des Kolbens und mit dem anderen Ende an einem nach außen gerichteten Kragen des Schaltringes abstützt. Sobald der zweite Druckraum entlüftet, das heißt drucklos wird, wird die Feder wirksam und entsperrt den Sperrmechanismus bzw. die beiden Konusflächen kommen außer Kontakt. Damit der zweite Druckraum vollständig abgedichtet ist, ist vorgesehen, dass der Schaltring und Schalttopf sich überlappen und dass in diesen Bereich eine Dichtung eingesetzt ist.

Gemäß einer zweiten Lösung ist vorgesehen, dass der durch die Federspeicherfeder belastete Kolben mit einer Gewindespindel in Eingriff steht, die mit einer Bremse derart in Wirkverbindung steht, dass im Lösezustand des Bremszylinders die Spindel durch die aufgebrachte Bremskraft gegen Drehung gesichert ist, und dass durch Verringerung oder Aufhebung der Bremskraft die Gewindespindel drehfähig ist, so dass durch die Entspannung der Federspeicherfeder der Kolben in Längsrichtung der Spindel verfahrbar ist.

Bei dieser Ausführung kann die von der Federspeicherfeder einwirkende Kraft reguliert werden.

Bei dieser Ausführung ist noch vorgesehen, dass die Gewindespindel nicht selbsthemmend ist, und dass die Reibkraft der Bremse mittels eines druckbeaufschlagbaren Steuerkolbens regelbar ist. Die Steigungen der Gewindegänge der Gewindespindel sind demzufolge recht hoch, so dass die Verstellgeschwindigkeit des federbelasteten Kolbens entsprechend hoch ist.

Um den Bremszylinder von der Feststellbremsung in die Lösestellung zu überführen ist vorgesehen, dass die Gewindespindel rotierend antreibbar ist. Dadurch wird der mit der Gewindespindel in Eingriff stehende federbelastete Kolben längs der Spindel in Richtung zum Kolben für die Feststellbremsung verfahren. Die Betriebsbremsung erfolgt wie bei den zuerst beschriebenen Ausführungen durch Druckbeaufschlagung des entsprechenden Kolbens.

Anhand der beiliegenden Zeichnungen wird die Erfindung noch näher erläutert.

Es zeigen:
- Figur 1: den erfindungsgemäßen Bremszylinder im Halbschnitt, in der Lösestellung und in der Feststellbremsstellung,
- Figur 2: eine der Figur 1 entsprechende Darstellung, jedoch die miteinander gekoppelten Kolben zur Einleitung der Lösestellung und
- Figur 3: eine weitere Ausführungsform des erfindungsgemäßen Bremszylinders in einer Halbschnittdarstellung

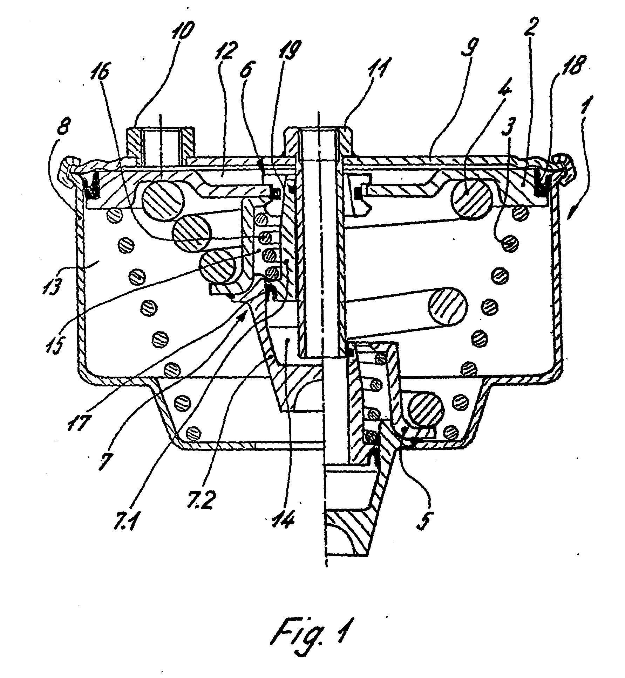

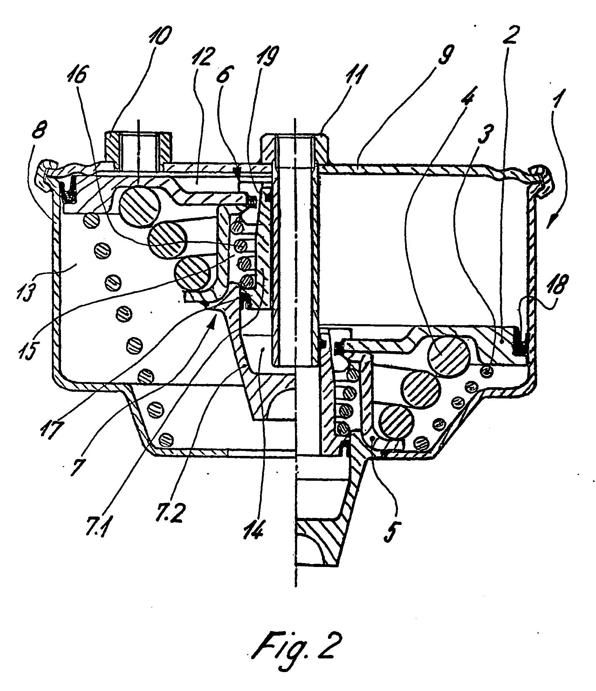

Der in den Figuren 1 bis 3 dargestellte Bremszylinder 1 enthält ein topfförmiges Gehäuse 8, in dem die noch näher erläuterten Funktionssteile montiert sind. Das topfförmige Gehäuse 8 ist durch einen Deckel 9 verschlossen, der mit zwei Druckluftanschlüssen 10, 11 versehen ist. Der Druckluftanschluss 11 ist zentrisch und für die Feststellbremsung vorgesehen, während der Druckluftanschluss 10 für die Betriebsbremsung vorgesehen ist. In dem topfförmigen Gehäuse 8 ist ein Kolben 2 angeordnet, dessen Durchmesser dem Innendurchmesser des Gehäuses entspricht. Dieser Kolben 2 kann durch den Druckluftanschluss 10 mit Druckluft beaufschlagt werden und die Druckluft kann auch dadurch ausströmen. Wie die Figuren zeigen, ist der Kolben 2 im mittleren Bereich abgesenkt, so dass ein Druckraum 12 entsteht. Durch den Kolben 2 wird noch ein weiterer Raum 13 begrenzt, in dem eine kegelige Rückholfeder 3 und eine Federspeicherfeder 4 eingesetzt ist. Dieser Raum 13 wird von dem Gehäuse 8, einem durch die Federspeicherfeder 4 belasteten Kolben 5 und einem Schalttopf 7.2 begrenzt, der Teil eines Schaltzylinders 7 ist. Der Schaltzylinder 7 enthält auch noch einen Schaltring 7.1, der annähernd konzentrisch zum Kolben 5 verläuft. Dadurch wird von dem Schaltring 7.1 und dem Kolben 5 ein Ringraum 13 gebildet, in den eine Druckfeder 16 eingesetzt ist. Der Kolben 5 ist im Vertikalschnitt Z-förmig gestaltet, so dass sich die Druckfeder 16 an dem oberen, dem Kolben 2 zugewandten Ende an einen nach innen gerichteten Kragen abstützt, während das gegenüberliegende Ende der Druckfeder 16 sich an einem nach außen gerichteten Kragen des Schaltringes 7.1 abstützt. Von der Innenfläche des Schalttopfes 7.2 und der zugewandten Stirnfläche des Schaltringes 7.1 wird die zweite Druckkammer 14 begrenzt. Die einander zugewandten Endbereiche des Schaltringes 7.1 und des Schalttopfes 7.2 überlappen sich und in diesen Bereich ist eine Dichtung 17 eingesetzt. Der Kolben 2 und der zugehörige Rand des Schaltringes 7.1 sind durch einen Sperrmechanismus 6 miteinander gekoppelt, um den Kolben 5 mit dem Kolben 2 zu koppeln oder zu entkoppeln wie noch erläutert wird. Der Kolben 2 ist mittels einer Dichtung 18 gegenüber dem Gehäuse 8 abgedichtet. Gemäß dem Ausführungsbeispiel nach den Figuren 1 und 2 besteht der Spemnechanismus 6 aus zwei Konusflächen 19, wobei eine Konusfläche dem Kolben 2 und die andere Konusfläche eine Fläche des Schaltringes 7.1 ist.

Der Federspeicherbremsabschnitt besteht im wesentlichen aus der Federspeicherfeder 4 und dem Kolben 5. Der Betriebsbremsabschnitt besteht im wesentlichen aus dem Kolben 2 und dem Druckraum 12. Gemeinsam ist beiden Abschnitten das Gehäuse 8 zugeordnet.

In den Figuren 1 und 2 zeigen die linksseitigen Halbschnitte den Bremszylinder 1 im nicht aktivierten Zustand, das heißt es erfolgt keine Bremsung. In der Figur 1 zeigt der rechtsseitige Halbschnitt die Stellung des durch die Federspeicherfeder 4 beaufschlagten Kolbens 5 in der Bremsstellung. Ist das Nutzfahrzeug noch im fahrbereiten Zustand, das heißt die Druckluftbremsanlage ist in Betrieb, steht die zweite Druckkammer 14 unter einem vorgegebenen Druck. Wird nun der Bremszylinder 1 für eine Feststellbremsung aktiviert, wird die zweite Druckkammer 14 zunächst drucklos. Durch die Wirkung der Druckfeder 16 verschiebt sich der Schaltring 7.1 des Schaltzylinders 7 um einen gewissen Betrag in seiner Längsrichtung, wie ein Vergleich der beiden Halbschnitte zeigt. Dadurch findet eine Entkopplung zwischen dem Kolben 2 für die Betriebsbremsung und dem Kolben 5 für die Feststellbremsung statt. Sobald diese Entkopplung durchgeführt ist, entspannt sich die Federspeicherfeder 4 und drückt den Schaltkolben 7 in die in der Figur 1 rechtsseitige Stellung.

Um die Feststellbremsung zu lösen, wird zunächst der Kolben 2 durch Einleiten von Druckluft in die Druckkammer 12 druckbeaufschlagt. Er fährt dadurch in die in der rechten Schnittdarstellung dargestellte Stellung, das heißt die Konusflächen 19 kommen wieder in Kontakt und die Kolben 2 und 5 sind miteinander gekoppelt. Um diese Stellung zu erreichen, ist die auf den Kolben 2 einwirkende Kraft und die von der Federspeicherfeder 4 aufgebrachte Kraft aufeinander abgestimmt. Da die zweite Druckkammer 14 während der Feststellbremsung drucklos ist, wird diese zum Lösen wieder druckbeaufschlagt. Dadurch findet die Kopplung der beiden Kolben 2 und 5 statt. Anschließend wird die Druckkammer 12 entlüftet, das heißt drucklos gemacht, so dass die Kolben 2 und 5 durch die Rückholfeder 3 in die in den linksseitigen Halbschnitten dargestellten Stellungen zurückgeführt werden. Dieser Vorgang ist beliebig oft wiederholbar. Die Feststellbremse erreicht somit ohne Einschränkung die volle Funktionalität.

Diese Lösung besitzt gegenüber anderen bekannten Vorschlägen, z. B. mit sogenannten Verriegelungen der Bremse bzw. des Bremszylinders signifikante Vorteile. So ist die Federspeicherfeder 4 vollkommen unabhängig von der Funktion des Kolbens 2 für die Betriebsbremsung. Durch die vorgespannte Feder 4 werden im Gegensatz zu den Verriegelungslösungen abfallende Kräfte während der Feststellbremsung vermieden. Diese abfallenden Kräfte werden durch Setz- und Schrumpfeffekte versucht. Darüber hinaus ist die Lösung äußerst sicher, da die Feststellbremsung auch eingeleitet werden kann, wenn der Zylinder für die Betriebsbremsung funktionsunfähig ist. Die Figuren zeigen, dass der Bremszylinder 1 einen Federspeicherbremsabschnitt und einen Betriebsbremsabschnitt enthält, die eine Baueinheit bilden. Dadurch wird die Baugröße gegenüber den bekannten Ausführungen wesentliche verringert.

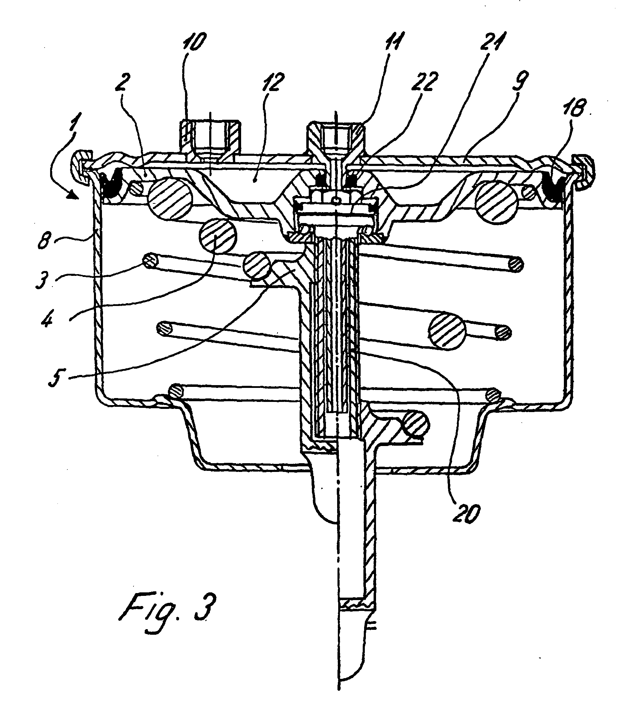

Die Ausführung nach der Figur 3 arbeitet ohne den Schaltzylinder. Der Kolben 5 ist hülsenförmig gestaltet und mit einer Gewindespindel 20 ausgestattet die den Druckluftzuführkanal umgibt. Die Gewindespindel 20 ist nicht selbsthemmend, jedoch mit einer Bremse 21, im dargestellten Ausführungsbeispiel mit einer Reibbremse gekoppelt. Die Reibkraft wird durch Druckluftkolben 22 erzeugt. Dadurch ist es möglich, dass die von der Bremse 21 aufgebrachte Kraft gesteuert wird. In der linksseitigen Stellung ist die Bremse 21 aktiviert, so dass die Gewindespindel 20 gegen Drehung gesichert ist. Soll nun der Kolben 5 in die in der rechtsseitigen Darstellung dargestellte Feststellbremsstellung überführt werden, wird die von der Bremse 21 aufgebrachte Kraft verringert, dadurch wird durch die von der Federspeicherfeder 4 aufgebrachte Kraft bewirkt, dass sich beim Unterschreiten einer bestimmten Bremskraft die Gewindespindel 20 dreht. Die Drehzahl ist durch die Bremskraft regelbar, so dass auch die lineare Bewegung des Kolbens 5 gesteuert werden kann.

Zum Lösen der Bremsstellung wird entsprechend der vorherigen Ausführung die Druckkammer 12 mit Druck beaufschlagt. Da die Druckluftkolben 22 drucklos sind, kann sich die Gewindespindel 20 verdrehen so dass der Kolben 5 entgegen der Wirkung der Federspeicherfeder 4 in die Ausgangsstellung zurückfahren kann.

Es sei noch erwähnt, dass der Kolben 5 über einen Hebel oder über ein Gestänge mit der nicht dargestellten Bremse gekoppelt ist.

Die Erfindung ist nicht auf die dargestellten Ausführungsbeispiele beschränkt. Wesentlich ist, dass der Bremszylinder 1 aus einem Federspeicherbremsabschnitt und einem Betriebsbremsabschnitt besteht und dass diese beiden Abschnitte zu einer baulichen Einheit zusammengefasst sind. Außerdem ist vorteilhaft, dass zum Einleiten des Lösevorganges des Bremszylinders 1 bzw. der Bremse der Kolben 2 für die Betriebsbremsung aktiviert wird, und dass bei der ersten Ausführung eine Kopplung mit dem zweiten Bremszylinder 5 für die Feststellbremsung erfolgt.

## Patentansprüche

1. Bremszylinder (1) für Fahrzeugbremsen, insbesondere für Bremsen von Nutzfahrzeugen mit
a) einem Federspeicherbremsabschnitt (4, 5) insbesondere zur Durchführung von Feststellbremsvorgängen mittels einer Federspeicherfeder (4),
b) und einem Betriebsbremsabschnitt (2, 3) zur Durchführung druckluftbetätigter Betriebsbremsungen, wobei
c) der Federspeicherbremsabschnitt (4, 5) und der Betriebsbremsabschnitt (2, 3) zu einer baulichen Einheit zusammengefasst sind,
d) dass der Bremszylinder (1) von einem Kolben (2) in zwei Räume (12, 14) unterteilt ist, wobei
e) der eine der beiden Räume als Druckraum (12) zum Betätigen der Betriebsbremse dient, und
f) wobei die Federspeicherfeder (4) des Federspeicherabschnittes in einem weiteren Raum (13) auf der gegenüberliegenden Seite des Kolbens (2) angeordnet ist, **gekennzeichnet durch**
g) eine Auslegung derart, dass **durch** Entlüften eines zweiten Druckraumes (14) die Federspeicherfeder (4) lösbar ist, dass
h) die Federspeicherfeder (4) auf einen weiteren Kolben (5) wirkt, der
i) mittels eines Sperrmechanismus (6) gegenüber dem Kolben (2) arretierbar und
j) **durch** Lösen des Sperrmechanismus von diesem lösbar ist, und
k) der direkt oder über weitere Elemente mit einer Kolbenstange zum Betätigen der Fahrzeugbremse verbunden ist, wobei
l) nach dem Lösen des Sperrmechanismus (6) die Federspeicherfeder (4) zwischen den beiden Kolben (2, 5) wirkt und diese bei einer Feststellbremsung relativ zueinander verschiebt.

2. Bremszylinder nach Anspruch 1, **dadurch gekennzeichnet, dass** in dem weiteren Raum (13) auf der gegenüberliegenden Seite des Kolbens (2) eine Rückstellfeder (3) für die Betriebsbremse angeordnet ist.

3. Bremszylinder nach Anspruch 1, **dadurch gekennzeichnet dass** bei der Feststellbremsung der von der Federspeicherfeder (4) belastete weitere Kolben (5) relativ zum Kolben (2) für die Betriebsbremsung verschiebbar ist.

4. Bremszylinder nach einem vorstehenden Ansprüche, **dadurch gekennzeichnet, dass** zum Lösen des von der Federspeicherfeder 4 belasteten weiteren Kolbens (5) zunächst der Kolben (2) für die Betriebsbremsung in Richtung zum weiteren Kolben (5) für die Feststellbremse verfahrbar ist, dass der Sperrmechanismus (6) durch Druckbeaufschlagung der zweiten Druckkammer (14) schließbar ist, und dass anschließend beide Kolben (2, 5) durch Druckentlastung des Kolbens (2) in die Lösestellung mittels der Rückstellfeder (3) verfahrbar sind.

5. Bremszylinder nach Anspruch 4, **dadurch gekennzeichnet, dass** der Sperrmechanismus durch Druckbeaufschlagung des von der Federspeicherfeder (4) belasteten weiteren Kolbens (5) schließbar ist.

6. Bremszylinder nach einem vorstehenden Ansprüche, **dadurch gekennzeichnet, dass** zum Verfahren des von der Federspeicherfeder (4) belasteten weiteren Kolbens (5) für die Feststellbremsung dieser Kolben (5) zur Freigabe des Sperrmechanismus (6) druckentlastbar ist.

7. Bremszylinder nach einem der vorstehenden Ansprüche, **dadurch gekennzeichnet, dass** der Sperrmechanismus aus zwei in der Sperrstellung sich kontaktierende Konusflächen (19) gebildet ist.

8. Bremszylinder nach einem der vorstehenden Ansprüche, **dadurch gekennzeichnet, dass** der zweite Druckraum (14) innerhalb eines Schaltzylinders (7) liegt, dass der Schaltzylinder (7) zweiteilig ausgebildet ist und aus einem den Kolben (2) für die Betriebsbremsung zugewandt liegenden Schaltring (7.1) und einem dem Kolben (2) für die Betriebsbremsung abgewandt liegenden Schalttopf (7.2) besteht.

9. Bremszylinder nach Anspruch 8, **dadurch gekennzeichnet, dass** der zweite Druckraum (14) zum Sperren des Sperrmechanismus (6) in dem Schalttopf (7.2) vorgesehen ist.

10. Bremszylinder nach Anspruch 8 oder 9, **dadurch gekennzeichnet, dass** zwischen dem weiteren Kolben (5) für den Feststellbremsvorgang und dem Schaltring (7.1) ein Ringraum (15) vorgesehen ist, in dem eine Druckfeder (16) eingesetzt ist, die sich mit einem Ende an einem nach innen gerichteten Kragen des weiteren Kolbens (5) und mit dem anderen Ende an einem nach außen gerichteten Kragen des Schaltringes (7.1) abstützt.

11. Bremszylinder nach Anspruch 9, **dadurch gekennzeichnet, dass** der Schaltring (7.1) und der Schalttopf (7.2) sich überlappen, und dass in diesen Bereich eine Dichtung (17) eingesetzt ist.

12. Bremszylinder nach Anspruch 1 **dadurch gekennzeichnet, dass** der durch die Federspeicherfeder (4) belastete weitere Kolben (5) mit einer Gewindespindel (20) in Eingriff steht, die mit einer Bremse (21) derart in Wirkverbindung steht, dass im Lösezustand des Bremszylinders (1) die Spindel (20) durch die aufgebrachte Bremskraft gegen Drehung gesichert ist, und dass durch Verringerung oder Aufhebung der Bremskraft die Gewindespindel (20) drehfähig ist, so dass durch die Entspannung der Federspeicherfeder (4) der weitere Kolben (5) in Längsrichtung der Gewindespindel (20) verfahrbar ist.

13. Bremszylinder nach Anspruch 12, **dadurch gekennzeichnet, dass** die Gewindespindel (20) nicht selbsthemmend ist, und dass die Reibkraft der Bremse (21) mittels druckbeaufschlagbarem Druckluftkolben (22) regelbar ist.

14. Bremszylinder nach einem der vorstehenden Ansprüche, **dadurch gekennzeichnet, dass** zum Überführen des weiteren Kolbens (5) von der Feststellbremsstellung in die Lösestellung die Gewindespindel rotierend antreibbar ist.

## Claims

1. Brake cylinder (1) for vehicle brakes, in particular for the brakes of commercial vehicles, with:
a) a spring brake section (4, 5), in particular for applying a parking brake by means of a spring (4),
b) and a service brake section (2, 3) for applying a compressed-air actuated service brake, such that
c) the spring brake section (4, 5) and the service brake section (2, 3) are combined in a single structural unit,
d) the brake cylinder (1) is divided by a piston (2) into two spaces (12, 14), such that
e) one of the said two spaces serves as a pressure space (12) for actuating the service brake, and
f) such that the spring (4) of the spring section is accommodated in another space (13) on the opposite side of the piston (2), **characterised by**
g) a design such that by venting a second pressure space (14) the spring (4) can be released,
h) the spring (4) acts upon a further piston (5), which
i) can be fixed relative to the piston (2) by means of a detaining mechanism (6), and
j) it can be released from the detaining mechanism by releasing the latter, and
k) which is connected directly or via other elements to a piston rod for actuating the vehicle's brakes, such that
l) once the detaining mechanism (6) has been released, the spring (4) acts between the two pistons (2, 5) and displaces them relative to one another during the application of the barking brake.

2. Brake cylinder according to Claim 1, **characterised in that** a restoring spring (3) for the service brake is arranged in the said other space (13) on the opposite side of the piston (2).

3. Brake cylinder according to Claim 1, **characterised in that** during parking brake operation the further piston (5) acted upon by the spring (4) can be displaced relative to the piston (2) for service brake actuation.

4. Brake cylinder according to any of the preceding claims, **characterised in that** to release the said further piston (5) acted upon by the spring (4), the piston (2) for service brake actuation can first be moved toward the further piston (5) for the parking brake, the detaining mechanism (6) can be closed by pressurising the second pressure chamber (14), and then the two pistons (2, 5) can be moved by the restoring spring (3) to the release position by relieving the pressure on the piston (2).

5. Brake cylinder according to Claim 4, **characterised in that** the detaining mechanism (6) can be closed by pressurising the further piston (5) acted upon by the spring (4).

6. Brake cylinder according to any of the preceding claims, **characterised in that** to move the further piston (5) acted upon by the spring (4) for parking brake application, the pressure on this piston (5) can be relieved in order to release the detaining mechanism (6).

7. Brake cylinder according to any of the preceding claims, **characterised in that** the detaining mechanism is formed by two conical surfaces (19) that contact one another in the locking position.

8. Brake cylinder according to any of the preceding claims, **characterised in that** the second pressure space (14) is located inside a control cylinder (7), the said control cylinder (7) being made in two parts and consisting of a switch-ring (7.1) that faces towards the piston (2) for service brake actuation and a switch-pot (7.2) that faces away from the piston (2) for service brake actuation.

9. Brake cylinder according to Claim 8, **characterised in that** the second pressure space (14) for locking the detaining mechanism (6) is located in the switch-pot (7.2).

10. Brake cylinder according to Claims 8 or 9, **characterised in that** an annular space (15) is provided between the further piston (5) for parking brake application and the switch-ring (7.1), and in this space a compression spring is set, which is supported at one end against an inward-directed collar of the said further piston (5) and at the other end against an outward-directed collar of the switch-ring (7.1).

11. Brake cylinder according to Claim 9, **characterised in that** the switch-ring (7.1) and the switch-pot (7.2) overlap one another and a seal (17) is set into the overlap area.

12. Brake cylinder according to Claim 1, **characterised in that** the further piston (5) acted upon by the spring (4) is engaged with a threaded spindle (20) which is in active connection with a brake (21) in such manner that in the release condition of the brake cylinder (1) the spindle (20) is secured against rotation by the applied brake force, and by reducing or removing the brake force the threaded spindle (20) is enabled to rotate, so that by relaxing the spring (4) the further piston (5) can be moved in the longitudinal direction of the threaded spindle (20).

13. Brake cylinder according to Claim 12, **characterised in that** the threaded spindle (20) is not self-locking and the friction force of the brake (21) can be regulated by means of a compressed-air piston (22) which can be pressurised.

14. Brake cylinder according to any of the preceding claims, **characterised in that** to move the further piston (5) from the parking brake position to the release position, the threaded spindle can be driven in rotation.

## Revendications

1. Cylindre (1) de frein pour freins de véhicules, en particulier pour des freins de véhicules utilitaires, comportant
a) une partie (4, 5) de frein à ressort accumulateur, notamment pour effectuer des processus de freinage de stationnement au moyen d'un ressort (4) accumulateur,
b) et une partie (2, 3) de frein de service pour effectuer des freinages de service actionnés par air comprimé,
c) sachant que la partie (4, 5) de frein à ressort accumulateur et la partie (2, 3) de frein de service sont réunies de manière à former une seule unité de construction,
d) sachant que le cylindre (1) de frein est divisé par un piston (2) en deux chambres (12, 14),
e) sachant que l'une des deux chambres sert de chambre (12) de pression pour l'actionnement du frein de service,
f) et sachant que le ressort (4) accumulateur de la partie à ressort accumulateur est disposé dans une autre chambre (13) sur le côté opposé du piston (2),
**caractérisé par**
g) une conception de telle sorte que le ressort (4) accumulateur peut être libéré par purge d'air d'une deuxième chambre (14) de pression,
h) et que le ressort (4) accumulateur agit sur un autre piston (5),
i) qui peut être bloqué par rapport au piston (2) au moyen d'un mécanisme (6) de blocage
j) et qui peut en être libéré en libérant le mécanisme de blocage,
k) et qui est relié directement ou via d'autres éléments à une tige de piston pour l'actionnement du frein du véhicule,
l) sachant qu'une fois le mécanisme (6) de blocage libéré, le ressort (4) accumulateur agit entre les deux pistons (2, 5) et les déplace l'un par rapport à l'autre lors d'un freinage de stationnement.

2. Cylindre de frein suivant la revendication 1, **caractérisé en ce qu'**un ressort (3) de rappel pour le frein de service est disposé dans l'autre chambre (13) sur le côté opposé du piston (2).

3. Cylindre de frein suivant la revendication 1, **caractérisé en ce que**, lors du freinage de stationnement, l'autre piston (5) sollicité par le ressort (4) accumulateur peut être déplacé en translation par rapport au piston (2) pour le freinage de service.

4. Cylindre de frein suivant l'une des revendications précédentes, **caractérisé en ce que**, pour libérer l'autre piston (5) sollicité par le ressort (4) accumulateur, le piston (2) pour le freinage de service peut être d'abord déplacé en direction de l'autre piston (5) pour le frein de stationnement, **en ce que** le mécanisme (6) de blocage peut être fermé en sollicitant en pression la deuxième chambre (14) de pression, et **en ce qu'**ensuite, les deux pistons (2, 5) peuvent, en soulageant de la pression le piston (2), être déplacés dans la position de libération au moyen du ressort (3) de rappel.

5. Cylindre de frein suivant la revendication 4, **caractérisé en ce que** le mécanisme de blocage peut être fermé en soumettant à une pression l'autre piston (5) chargé par le ressort (4) accumulateur.

6. Cylindre de frein suivant l'une des revendications précédentes, **caractérisé en ce que**, pour déplacer l'autre piston (5) pour le freinage de stationnement, piston qui est chargé par le ressort (4) accumulateur, ce piston (5) peut être soulagé de la pression afin de libérer le mécanismes (6) de blocage.

7. Cylindre de frein suivant l'une des revendications précédentes, **caractérisé en ce que** le mécanisme de blocage est formé par deux surfaces coniques (19) qui entrent en contact mutuel dans la position de blocage.

8. Cylindre de frein suivant l'une des revendications précédentes, **caractérisé en ce que** la deuxième chambre (14) de pression se trouve à l'intérieur d'un cylindre (7) de commutation, et **en ce que** le cylindre (7) de commutation est réalisé en deux parties et est constitué d'une bague (7.1) de commutation, tournée vers le piston (2) pour le freinage de service, et d'un pot (7.2) de commutation, opposé au piston (2) pour le freinage de service.

9. Cylindre de frein suivant la revendication 8, **caractérisé en ce que** la deuxième chambre (14) de pression est prévue pour bloquer le mécanisme (6) de blocage dans le pot (7.2) de commutation.

10. Cylindre de frein suivant la revendication 8 ou 9, **caractérisé en ce qu'**une chambre (15) annulaire est prévue entre l'autre piston (5) pour le processus de freinage de stationnement et la bague (7.1) de commutation, chambre dans laquelle est inséré un ressort (16) de pression qui s'appuie par une extrémité contre un collet, dirigé vers l'intérieur, de l'autre piston (5), et par l'autre extrémité contre un collet, dirigé vers l'extérieur, de la bague (7.1) de commutation.

11. Cylindre de frein suivant la revendication 9, **caractérisé en ce que** la bague (7.1) de commutation et le pot (7.2) de commutation se chevauchent, et **en ce qu'**un joint (17) d'étanchéité est inséré dans cette région.

12. Cylindre de frein suivant la revendication 1, **caractérisé en ce que** l'autre piston (5) sollicité par le ressort (4) accumulateur est en prise avec une broche (20) filetée qui se trouve en liaison fonctionnelle avec un frein (21) de telle sorte que, lorsque le cylindre (1) de frein est libéré, la broche (20) est bloquée en rotation par la force de freinage appliquée, et **en ce qu'**en diminuant ou supprimant la force de freinage, la broche (20) filetée peut tourner, de sorte que, par la détente du ressort (4) accumulateur, l'autre piston (5) peut être déplacé dans la direction longitudinale de la broche (20) filetée.

13. Cylindre de frein suivant la revendication 12, **caractérisé en ce que** la broche (20) filetée n'est pas autobloquante, et **en ce que** la force de friction du frein (21) peut être régulée au moyen d'un piston (22) à air comprimé pouvant être sollicité en pression.

14. Cylindre de frein suivant l'une des revendications précédentes, **caractérisé en ce que** la broche filetée peut être entraînée en rotation afin de transférer l'autre piston (5) de la position de frein de stationnement dans la position de desserrage.
